Europäisches Patentamt

European Patent Office

Office européen des brevets

(19)

(11) Veröffentlichungsnummer: **0 008 390**
**B1**

(12) **EUROPÄISCHE PATENTSCHRIFT**

(45) Veröffentlichungstag der Patentschrift: **03.11.82**

(21) Anmeldenummer: **79102726.1**

(22) Anmeldetag: **31.07.79**

(51) Int. Cl.³: **C 08 G 8/18,** C 08 G 8/04,
C 08 G 8/22, C 08 L 61/12

(54) **Verfahren zur Herstellung eines Schaumkunststoffs.**

(30) Priorität: **09.08.78 DE 2834794**

(43) Veröffentlichungstag der Anmeldung:
**05.03.80 Patentblatt 80/5**

(45) Bekanntmachung des Hinweises auf die Patenterteilung:
**03.11.82 Patentblatt 82/44**

(84) Benannte Vertragsstaaten:
**AT BE CH FR GB IT LU NL SE**

(56) Entgegenhaltungen:
**DE - A - 1 694 820**
**DE - A - 2 112 061**
**DE - A - 2 549 441**
**DE - A - 2 716 811**
**DE - C - 749 553**
**FR - A - 1 080 782**
**FR - A - 1 099 034**

Die Akte enthält technische Angaben, die nach dem
Eingang der Anmeldung eingereicht wurden und die
nicht in dieser Patentschrift enthalten sind.

(73) Patentinhaber: **Schaum-Chemie W. Bauer GmbH &
CoKG**
**Kallenbergstrasse 21**
**D-4300 Essen 1 (DE)**

(72) Erfinder: **Baumann, Heinz**
**Römerstrasse 15**
**D-6711 Kleinniedesheim (DE)**

(74) Vertreter: **Wolff, Hans Joachim, Dr.jur. Dipl.-
Chem. et al,**
**Beil, Wolff & Beil Rechtsanwälte Postfach 80 01
40**
**D-6230 Frankfurt/Main 80 (DE)**

Courier Press, Leamington Spa, England.

## Verfahren zur Herstellung eines Schaumkunststoffs

Die Erfindung betrifft ein Verfahren zur Herstellung eines Schaumkunststoffs.

Harnstöff-Formaldehyd-Harz-Schaumkunststoffe (UF-Schaumkunststoffe), deren Herstellung und Anwendung sind aus der Literatur und aus Patentschriften bekannt.

Zur Herstellung von UF-Schaumstoff benötigt man ein wasserlösliches Tensid und ein UF-Harz (UF-Kondensationsprodukt). Die Konstitution der UF-Harze ist bis heute nicht völlig aufgeklärt.

Geeignete Tensidgemische enthalten neben dem eigentlichen Tensid in verdünnter Lösung einen Härter und eine chemische Substanz, die Schimmelbildung im fertigen UF-Schaumkunststoff verhindern soll, z.B. Resorcin. Zusammensetzungen sind in der Literatur beschrieben.

Als Härter verwendet man vorzugsweise anorganische Säuren, insbesondere Phosphorsäure. Als Tensid läßt sich z.B. diisobutylnaphthalinsulfonsaures Natrium, ein wasserlösliches anionisches Tensid, nachstehend als DIBNS-Na bezeichnet, verwenden. 40 ml eines im Handel erhältlichen, zur Herstellung von Schaumkunststoffen geeigneten Tensidgemischs bestehen z.B. aus 13,83 g DIBNS-Na, 4,40 g Resorcin und 11,80 g 85%iger Phosphorsäure in Form einer gelblichen, hochviskosen Paste mit ca. 24 bis 30% Wassergehalt (pH 10 bis 12) oder in Form einer Trockensubstanz als helles, hygroskopisches Pulver (pH 7 bis 11).

Die Tenside sind in der Schaumlösung zur Herstellung von UF-Schaumkunststoffen sehr stark mit Wasser verdünnt. Die spritzfertigen Lösungen haben einen Festgehalt zwischen 2 und 5%.

Früher nahm man an, daß das Tensid nur als Trägergerüst für das UF-Harz diene (Plastverarbeiter 9 (1958) 453); später vermutete man, daß es vielleicht auch ionisch mit den reaktionsfähigen Gruppen des UF-Harzes reagieren könne (Plastverarbeiter 27 (1976) 235).

Die Zugabe anderer chemischer Substanzen zu den Grundlösungen, um die physikalischen und chemischen Eigenschaften des fertigen UF-Schaumkunststoffes zu verbessern, ist auch schon lange bekannt (Kunststoffe 47 (1957) 256).

Unter den vielen Vorschlägen in der Literatur schlug man Amidosulfonsäure als Härter und nicht als Tensid vor (Bachmann und Bertz, Aminoplast, VEB-Verlag für Grundstoff-Industrie, Leipzig 1969).

UF-Schaumkunststoff, z.B. als Wärmedämmaterial im zweischaligen Mauerwerk, kann beim Austrocknen häufig geruchsbelästigenden Formaldehyd abgeben. Um diesen freien Formaldehyd in irgendeiner Form zu binden, stellte man umfangreiche Versuche an.

Dabei wurde gefunden, daß sulfonsaure Gruppen enthaltende Verbindungen und Aldehyde in Gegenwart einer Hydroxyverbindung unter geeigneten Bedingungen quantitativ miteinander reagieren.

Dies war überraschend, weil man bei der bisherigen jahrelangen Verwendung von Tensidgemischen, die Sulfonsäure und beispielsweise Resorcin als Hydroxyverbindung enthielten, in stark verdünnter Form als Schaummittel zur Herstellung von UF-Schaumkunststoffen niemals eine nennenswerte Reaktion zwischen dem Tensid und dem überschüssigen Formaldehyd im UF-Kunststoff festgestellt hatte.

Überraschenderweise wurde gefunden, daß sich erfindungsgemäß Schaumstoffe durch Verschäumen von nur Monomeren entsprechend den vorstehend genannten Komponenten (a), (b), (f) und gegebenenfalls (c) herstellen lassen, ohne daß ein fertiges Harzprodukt bei den Ausgangsstoffen dabei sein muß. Erst nachdem alles aufgeschäumt ist, bildet sich aus den Monomeren eine Harz. Die zur Herstellung des erfindungsgemäßen Harzes verwendeten monomeren Komponenten (a), (b) und (c) werden in fast unverdünnter Form, d.h. mit einem Wassergehalt von 20 bis 30 Gew.%, vorzugsweise 24 Gew.%, in den Harzkessel gegeben und das gleiche Gemisch, jedoch in stark verdünnter Form als Tensid zusammen mit dem Aldehyd in den Druckkessel für die Schaummittellösung, und alles wird gemeinsam aufgeschäumt.

Das erfindungsgemäße Verfahren zur Herstellung von Schaumkunststoffen ist dadurch gekennzeichnet, daß man

A   (a)  eine oder mehrere sulfonsaure Gruppen enthaltende Verbindungen in Gegenwart

     (b)  einer Mono-, Di- oder Polyhydroxyverbindung oder Gemischen davon und

     (c)  gegebenenfalls einer oder mehreren anorganischen oder organischen Säuren, wobei, wenn (a) in Form eines Salzes vorliegt, (c) vorliegen muß,

in Form einer konzentrierten wäßrigen Lösung mit einem Wassergehalt von 20 bis 30 Gew.-%, sowie

     (d)  gegebenenfalls anderen, üblichen Zusatzstoffen und

     (e)  gegenenenfalls anderen Kunst- und Naturharzen mit

B   (f)  einem oder mehreren gesättigten oder ungesättigten Aldehyden oder Gemischen davon oder einer Verbindung, die im sauren Medium einen Aldehyd zu bilden vermag,

dem ein Tensid, bestehend aus einem Gemisch von (a), (b) und gegebenenfalls (c), in einer für Schaumstoffherstellung üblichen Verdünnung zugegeben wurde, in einer üblichen Schaumschlaganlage verschäumt, wobei bezogen auf ein Mol (a) 0,1 bis 5 Mol (b), 0,5 bis 12 Mol (f), 0 bis 10 Mol (c), 0 bis 50 Mol (d) und bis zu 80 Gew.-% (e) verwendet werden.

Die erfindungsgemäß hergestellten Schaumkunststoffe geben praktisch keinen bzw. nur relativ kurze Zeit geruchsbelästigenden Formaldehyd ab, bestizen gegenüber UF-Schaumkunststoffen eine stark verbesserte Beständigkeit gegenüber Säuren, Laugen und organischen Lösungsmitteln, eine gute Temperatur- und Flammbeständigkeit sowie gute mechanische und elektrische Eigenschaften.

Die erfindungsgemäß hergestellten Schaumkunststoffe finden Verwendung als Isolier- und Wärmedämm-Materialien, in der Plastoponik, als Ölabsorptionsmittel, Wundauflagen, Blumensteckmasse und gepulvert als Füllstoffe, Filtermaterialien und pharmazeutische Puder.

Als sulfonsaure Gruppen enthaltende Verbindungen lassen sich Sulfonsäuren, Sulfinsäuren und Sulfamidsäuren und deren Salze alleine oder im Gemisch verwenden. Beispiele dafür sind Arylalkylsulfonate wie die Alkylbenzolsulfonate und Alkylnaphthalinsulfonate, die als wichtige grenzflächenaktive Rohstoffe bekannt sind.

Naphtholsulfonsäuren, Naphthylaminsulfonsäuren und Aminonaphtholsulfonsäuren und ihre Natriumsalze sind als leicht zugängliche Grund- oder Zwischenprodukte bei der Farbstoffherstellung bekannt. Antrachinonsulfonsäure und ihre Natriumsalze sind ebenfalls Zwischenprodukte bei der Farbstoffsynthese. Ein Schema dieser Verbindungen ist in "Römpps Chemie-Lexikon", 7, Auflage, S. 2259, aufgezeigt.

Naphthalinsulfonsäuren sind als Mono-, Di-, Tri- und Tetrasulfonsäuren bekannt.

Heterocyclische Sulfonsäuren lassen sich z.B. aus Acridin und Acridon mittels Chlorsulfonsäure herstellen.

Sulfaminsäuren sind z.B. Amidoschwefelsäure, Amidosulfonsäure oder als Sulfamidsäuren zu bezeichnende Verbindungen.

Eine Auswahl von erfindungsgemäß verwendbaren Sulfonsäuren sei hier genannt: Phenolsulfonsäure, Alkyl-schwefelsäure und alkylschwefelsaure Salze, Alkylsulfonsäurechloride, Alkylsulfonsäureester, Alkylsulfonsäure und alkylsulfonsaure Salze, Paraaminobenzolsulfonsäuren, Aminonaphtholsulfonsäuren, Aminosulfonsäuren, Anilinsulfonsäuren, Antrachinonsulfonsäuren, Arylsulfonsäuren und deren Amide und Chloride, Ethansulfonsäure, Ethylschwefelsäure, Benzoldisulfonsäuren, Benzolsulfaminsäure und Benzolsulfinsäure, Brenzcatechinsulfonsäure, Brombenzolsulfonsäure, Bromcamphersulfonsäure, Chlorsulfonsäureester, Diaminoantrachinondisulfinsäure, Nitrobenzolsulfonsäure, Nitronaphthalinsulfonsäure, Nitroso-$\beta$-naphthol-6-sulfonsäure, Phenoldisulfonsäure, Phenolsulfonsäure, Phenylhydrazinsulfonsäure, phenylhydrazinsulfonsaures Natrium, Pyridinsulfonsäure, Thiophensulfonsäure, vinyl-sulfonsaure Natrium-salze.

Dinitro-oxynaphthalin-sulfonsäure, Halogensulfonsäure, hydrazinsulfonsaure Salze, Indigosulfonsäure und Indigodisulfonsäure, iso-dodecylbenzolsulfonsaures Natrium, Perfluorosulfonsäure, bathocuproindisulfonsaures Natriumsalz und Dinatriumsalz, Dimethylbenzosulfonsäure, Morpholino-Ethansulfonsäure, Naphthochinonsulfonsäure und Salze und seltenere Sulfonsäuren wie z.B. Ferrospectral (III (II-Pyrinyl)-V, VI- bis (IV-Phenylsulfonsäure)-1,2,4-triacin-dinatriumsalz). Besonders bevorzugt sind die Aryl- und Alkylarylsulfonsäuren und deren Salze, insbesondere diisobutylnaphthalinsulfonsaures Natrium.

Sie lassen sich in wäßrigen oder nichtwäßrigen Lösungen in relative konzentrierter Form erfolgreich anwenden.

Als erfindungsgemäß verwendbare Aldehyde eignen sich sowohl gesättigte als auch ungesättigte aliphatische und aromatische Aldehyde sowie Verbindungen, die im sauren Medium einen Aldehyd zu bilden vermögen. Geeignete Beispiele für Aldehyde sind Form-, Acet-, Propion-, Butyr-, Valer-, Glutardi-Pelargon-, Furfuryl-, Croton-, Triglin-, Sorbin-, Stearin-, Malon-, Myristicin- und Pyridinaldehyd sowie Glyoxal und Gemische davon. Ein geeignetes Beispiel einer Verbindung, die im sauren Medium einen Aldehyd zu bilden vermag, ist Hexamethylentetramin. Sie lassen sich in einer Menge von 0,5 bis 12 Mol je Mol sulfonsaure Gruppen enthaltender Verbindung verwenden. Gewöhlich werden sie in ihrer im Handel erhältlichen Konzentration eingesetzt, die bei den einzelnen Aldehyden unterschiedlich sein kann. Besonders bevorzugt ist eine 35%ige wäßrige Formaldehydlösung.

Als Hydroxyverbindungen eignen sich besonders Phenole. Diese Phenole Können ein- oder mehrwertige, substituierte oder nichtsubstituierte Phenole sein wie Phenol, Resorcin, Brenzcatechin, Hydrochinon und deren tautomere Carbonylformen; Trihydroxybenzole wie Pyrogallol, Hydroxyhydrochinon, Polyhydroxybenzole in ihren drei möglichen Formen (1,2,3,4-, 1,2,3,5- und 1,2,4,5-Tetraoxybenzol); Dihydroxytoluol, Salicylsäure und Gallussäure sowie Gemische davon. Sie lassen sich in einer Menge von 0,1 bis 5 Mol je Mol sulfonsaure Gruppen enthaltender Verbindung verwenden. Besonders bevorzugt ist Resorcin.

Bei Verwendung von sulfonsaure Gruppen enthaltenden Verbindungen in der freien Säureform ist die Verwendung von organischen oder anorganischen Säuren als Härter nicht unbedingt erforderlich, erwies sich jedoch als besonders vorteilhaft. Verwendet man jedoch die sulfonsaure Gruppen enthaltenden Verbindungen in Form ihrer Salze so ist die Zugabe einer Säure erforderlich.

Als erfindungsgemäß geeignete Säuren lassen sich praktisch alle anorganischen und organischen Säuren, wie beispielsweise Salzsäure, Schwefelsäure, Phosphorsäure, Salpetersäure, Oxalsäure und Essigsäure verwenden. Besonders bevorzugt werden Phosphor- und Schwefelsäure.

Normalerweise werden die Säuren in den handelsüblichen Konzentrationen angewandt, können jedoch auch in verdünnterer Form verwendet werden.

Ihre Menge kann bis zu etwa 10 Mol, bezogen auf ein Mol der sulfonsaure Gruppen enthaltenden Verbindungen betragen.

Die Lösungen der Ausgangsverbindungen sollen konzentriert sein und nur soviel Wasser oder· nichtwäßriges Lösungsmittel enthalten, daß die Produkte gerade gelöst sind. 20 bis 30 Gew.-% Wasser erwiesen sich als brauchbar.

Als andere übliche Zusatzstoffe lassen sich im vorliegenden folgende Stoffe verwenden:

Füllstoffe, Farbstoffe, Pigmente, Alkohole, anorganische oder organische Fasern, Puffersubstanzen, Indikatoren, Katalysatoren, Regler, Emulgatoren, Weichmacher, Stabilisatoren, deuterierter Verbindungen, metallorganische Verbindungen, Metalle und Metallsalze, Alkoholate, Phenolate, Acetylacetonate, Lösungsmittel, Hydride, Amide, Heteroelementverbindungen, Produkte zur Regulierung der Polymerisation, Polyaddition und Polykondensation, Radikale und radikalische Initiatoren, kationische und anionische Initiatoren, Enzyme, Vitamine, Hormone, Steroide, Biochemica, Wirk- und Zusatzstoffe, Flammschutzmittel, Vernetzungsmittel, Treibmittel, UV-Stabilisatoren, antistatische leitfähigmachende Polymere oder Substanzen.

Sie können einzelen oder im Gemisch verwendet werden. Ihre Menge kann bis zu etwa 50 Mol je Mol der sulfonsaure Gruppen enthaltenden Verbindung betragen.

Es können ferner andere bekannte Kunst- oder Naturharze oder Gemische davon vor oder während des Kondensationsprozesses eingesetzt werden.

Diese Harze können wasserlöslich oder nicht wasserlöslich sein. Zu den geeigneten Harzen gehören beispielsweise:

Harze auf der Basis von Aminoplasten, Phenoplasten, Desmodur®, Alpha-Omega-Harnstoffharze oder deren Gemische, UF-, PUR-, PF-Harze, auch Styrolpolymerisate, elastomermodifizierte Copolymerisate, Polyamide, Polymethacrylate, Polycarbonate, Polytetrafluorethylen und Copolymerisate, Grundstoffe zur Herstellung von Polyacetalen, aromatische Polyether, Polyalkylenterephthalate, ungesättigte Polyesterharze, Silikonpolymere, Melamin-Harze und Epoxidharze.

Sie können in Mengen bis zu 80 Gew.-% zugesetzt werden.

Durch Variieren der Molverhältnisse der Ausgangsstoffe innerhalb der beanspruchten Bereiche lassen sich Produkte mit unterschiedlichen physikalischen Eigenschaften erzielen.

Beispiele für erfindungsgemäß herstellbare Schaumkunststoffe sind Weichschaum- (Form- und Blockschaum), halb-harte-, harte, Struktur- und in situ Schaumkunststoffe.

Die Aufschäumungen können in situ oder stationär, in Druckkesseln oder mit Pumpen hergestellt werden, oder wahlweise können Teile der Lösungen aus Druckkesseln oder durch Pumpen gefördert eine Schaumspritzpistole (Schaumapparatur) zugeführt werden. Es kann jeder gewünschte Druck und jedes zur Aufschäumung geeignete Gas oder Druckluft verwendet werden.

Alle in der Literatur und in den Patentschriften beschriebenen Apparaturen lassen sich verwenden. Es spielt dabei eine untergeordnete Rolle, ob die Lösungen oder feste geeignete Zusätze spitz-, rechtwinklig, im Gleich-oder Gegenstromverfahren zugeführt werden. Entscheidend ist die gute Vermischung der Reaktionskomponenten, damit die notwendigen chemischen Reaktionen eingeleitet werden oder eine Schaum erzeugt werden kann.

Es ist auch möglich, die Schäume aus kleinen handlichen Spraydosen im Ein- oder Mehrkammersystem zu erzeugen.

Wie bereits ausgeführt, gelang es erfindungsgemäß, einen Schaumkunststoff herzustellen, indem man ein Tensid anstelle eines UF-Harzkondensates verwendete und als Schaummittel eine gering mit Wasser verdünntes gleiches Tensid, dem man bereits Formaldehyd zugefügt hatte. Tensidkonzentrate schäumen sehr schlecht auf oder gar nicht. Um eine Schäumwirkung zu erreichen, muß man das konzentrierte Tensid mit Wasser verdünnen. Den Grad der Aufschäumung kann man leicht und praxisnah aus der Schaumspritzpistole in der BAUMANN-GRAF'schen Apparatus ermitteln (Chemiker Zeitung, Chem. App. 90 (1966) 449).

Verdünnen kann man ein konz. Tensid auch mit einer anderen Sulfonsäure als verdünnte oder gesättigte wäßrige Lösung. Durch diese Maßnahme läßt sich die Reaktionszeit der Harzbildung verkürzen.

Ein erfindungsgemäß hergestellter Schaum hatte folgende Eigenschaften:

Er war offenporig, teilweise waren einzelne Zellen mit Harzplatten abgedeckt, wie man sie bei einem 30 kg UF-Schaum kennt. Der Schaum war hydrophil.

| Lösungsversuche | nach 24 Stunden | aufgekocht |
|---|---|---|
| 1. 95%ig Schwefel-säure | aufgelöst | — |
| 1a) 40%ige Schwefel-säure | keine Veränderung | keine Verän-derung |
| 2. 37%ige rauchende Salzsäure | keine Veränderung | keine Verän-derung |
| 3. 85%ige Phosphor-säure | keine Veränderung | Farbvertiefung |
| 4. 65%ige Salpeter-säure | aufgelöst | — |
| 4a) 25%ige Salpeter-säure | aufgelöst | — |
| 5. 96%ige Essig-säure | keine Veränderung | keine Verän-derung |
| 6. absoluter Alkohol | keine Veränderung; Subst. färbt sich gelb | keine Verän-derung |
| 7. Aceton | keine Veränderung; Substanz färbt sich gelb | keine Verän-derung |
| 8. Dimethylform-amid | keine Veränderung | keine Verän-derung |
| 9. Dioxan | keine Veränderung; Substanz färbt sich gelb | keine Verän-derung |
| 10. Paraffinöl | keine Veränderung | keine Verän-derung |
| 10a) Motoröl | unterschiedliche Vis-kosität keine Zerstörung | — |
| 11. 20%ige Na-tronlauge | keine Veränderung | keine Ver-änderung |
| 12. Wasser | keine Veränderung (der pH-Wert betrug vor und nach dem Auf-kochen 2,5) | keine Ver-änderung |

Der Schmelzpunkt des Schaumes beträgt etwa 200°C. Der Schaum verkohlt in der Flamme bei etwa 300°C ohne abzutropfen.

**Patentansprüche**

1. Verfahren zur Herstellung eines Schaumkunststoffes, dadurch gekennzeichnet, daß man
A  (a)  eine oder mehrere sulfonsaure Gruppen enthaltende Verbindungen in Gegenwart
   (b)  einer Mono-, Di- oder Polyhydroxyverbindung oder Gemischen davon und
   (c)  gegebenenfalls einer oder mehreren anorganischen oder organischen Säuren, wobei, wenn (a) in Form eines Salzes vorliegt, (c) vorliegen muß,
in Form einer konzentrierten wäßrigen Lösung mit einem Wassergehalt von 20 bis 30 Gew.-%, sowie
   (d)  gegebenenfalls anderen, üblichen Zusatzstoffen und
   (e)  gegebenenfalls anderen Kunst- und Naturharzen mit
B  (f)  einem oder mehreren gesättigten oder ungesättigten Aldehyden oder Gemischen davon oder einer Verbindung, die im sauren Medium einen Aldehyd zu bilden vermag,
dem ein Tensid, bestehend aus einem Gemisch von (a), (b) und gegebenenfalls (c), in einer für Schaumstoffherstellung üblichen Verdünnung zugegeben wurde, in einer üblichen Schaumschlaganlage verschäumt, wobei, bezogen auf ein Mol (a) 0,1 bis 5 Mol (b), 0,5 bis 12 Mol (f), 0 bis 10 Mol (c), 0 bis 50 Mol (d) und bis zu 80 Gew.-% (3) verwendet werden.

2. Verfahren nach Anspruch 1, dadurch gekennzeichnet, daß man als (a) eine Sulfonsäure, Sulfinsäure, Sulfamidsäure oder eine Salz davon verwendet.

3. Verfahren nach Anspruch 2, dadurch gekennzeichnet, daß man als (a) eine Aryl- oder Alkylarylsulfonsäure oder ein Salz davon verwendet.

4. Verfahren nach einem der vorstehenden Ansprüche, dadurch gekennzeichnet, daß man als (b) ein ein-odermehrwertiges Phenol verwendet.

5. Verfahren nach Anspruch 4, dadurch gekennzeichnet, daß man als (b) Resorcin verwendet.

6. Verfahren nach einem der vorstehenden Ansprüche, dadurch gekennzeichnet, daß man als (f) · einen gesättigten Aldehyd verwendet.

7. Verfahren nach Anspruch 6, dadurch gekennzeich,et, daß man als (f) einen gesättigten Aldehyd mit 1 bis 9 C-Atomen verwendet.

8. Verfahren Nach Anspruch 7, dadurch gekennzeichnet, daß man als (f) Formaldehyd verwendet.

9. Verfahren nach einem der vorstehenden Ansprüche, dadurch gekennzeichnet, daß man als (c) Phosphor-, Schwefel- oder Essigsäure oder ein Gemisch davon verwendet.

10. Verfahren nach einem der vorstehenden Ansprüche, dadurch gekennzeichnet, daß man als (d) Füllstoffe, Farbstoffe, Farbpigmente, Alkohole, anorganische oder organische Fasern, Puffersubstanzen, Indikatoren, Katalysatoren, Regler, Emulgatoren, Weichmacher, Stabilisatoren, deuterierte Verbindungen, metallorganische Verbindungen, Metalle und Metallsalze, Alkoholate, Phenolate, Acetylacetonate, Lösungsmittel, Hydride, Amide, Heteroelementverbindungen, Produkte zur Regulierung der Polymerisation, Polyaddition und Polykondensation, Radikale und radikalische Initiatoren, kationische und anionische Initiatoren, Enzyme, Vitamine, Hormone, Steroide, Biochemica, Wirk- und Zusatzstoffe, Flammschutzmittel, Vernetzungsmittel, Treibmittel, UV-Stabilisatoren, antistatische leitfähigmachende Polymere oder Substanzen verwendet.

11. Verfahren nach einem der vorstehenden Ansprüche, dadurch gekennzeichnet, daß man als (e) UF-, PUR-, PF-Harze, Styrolpolymerisate, elastomermodifizierte Copolymerisate, Polyamid, Polymethacrylate, Polycarbonate, Polytetrafluorethylen und Copolymerisate, Grundstoffe zur Herstellung von Polyacetalen, aromatische Polyether, Polyalkylenterephthalate, ungesättigte Polyesterharze, Silikonpolymere, Melaminharze und Epoxidharze verwendet.

12. Schaumkunststoff, hergestellt nach einem der ansprüche 1 bis 11.

## Claims

1. Process for making a foam plastic, characterized in that
A   (a)  one or several compounds containing sulfonic groups in the presence of
    (b)  a mono-, di-, or polyhydroxy compound or mixtures thereof and
    (c)  possibly, one or several inorganic or organic acids, whereas when (a) is present in form of a salt, (c) must be present, in form of a concentrated aqueous solution having a water content of 20 to 30% by weight, as well as
    (d)  possibly other usual additions and
    (e)  possibly other synthetic and natural resins,
are foamed with a conventional foam making installation with
B   (f)  one or several saturated or unsaturated aldehydes or mixtures thereof or a compound which in acid medium is able to form an aldehyde
to which a tenside has been added consisting of a mixture of (a), (b), and possibly (c), in a dilution as usually used for making foam plastics, using relative to one mole (a), 0.1 to 5 mol (b), 0.5 to 12 mol (f), 0 to 10 mol (c), 0 to 50 mol (d) and up to 80% by weight (e).

2. Process according to Claim 1, characterized in that as (a) a sulfonic acid, sulfinic acid, sulfamidic acid or a salt thereof is used.

3. Process according to Claim 2, characterized in that as (a) an aryl- or alkylarylsulfonic acid or a salt thereof is used.

4. Process according to one of the preceding claims, characterized in that as (b) a mono- or polyvalent phenol is used.

5. Process according to Claim 4, characterized in that as (b) resorcinol is used.

6. Process according to one of the preceding claims, characterized in that as (f) a saturated aldehyde is used.

7. Process according to Claim 6, characterized in that as (f) a saturated aldehyde having 1 to 9 C-atoms is used.

8. Process according to Claim 7, characterized in that as (f) formaldehyde is used.

9. Process according to one of the preceding claims, characterized in that as (c) phosphoric, sulfuric or acetic acid or a mixture thereof is used.

10. Process according to one of the preceding claims, characterized in that as (d) fillers, dyestuffs, pigments, alcohols, inorganic or organic fibers, buffers, indicators, catalysts, regulators, emulsifiers, plasticizers, stabilizing agents, deuterated compounds, metalloorganic compounds, metals and metal salts, alcoholates, phenolates, acetylacetonates, solvents, hydrides, amides, heteroelement compounds, products for regulating the polymerization, polyaddition ahd polycondensation, radicals and radicalic initiators, cationic and anionic initiators, enzymes, vitamins, hormones, steroids, biochemica, active substances and additives, flame retardants, cross-linking agents, propellants, UV-stabilizers, antistatic conductive-making polymers or substances are used.

11. Process according to one of the preceding claims, characterized in that as (e) UF-, PUR-, PF-resins, styrene polymers, elastomer-modified copolymers, polyamides, polymethacrylates, polycarbonates, polytetrafluoroethylene and copolymers, basic substances for preparing polyacetals, aromatic polyethers, polyalkylene terephthalates, unsaturated polyester resins, silicone polymers, melamine resin,s and epoxide resins are used.

12. Foam plastic, made according to one of Claims 1 through 11.

**Revendications**

1. Procédé de fabrication d'une mousse en matière plastique, caractérisé en ce que:

A (a) un ou plusieurs composés renfermant un ou plusieurs groupements sulfoniques, en présence de:

(b) un composé mono-, di-, ou polyhydroxylé ou des mélanges de ceux-ci, et

(c) éventuellement un ou plusieurs acides inorganiques ou organiques, de façon que si (a) est présent sous forme de sel, (c) doit être présent obligatoirement,

sous forme d'une solution aqueuse concentrée ayant une teneur en eau de 20 à 30% en poids, ainsi que

(d) éventuellement d'autres additifs usuels, et

(e) éventuellement d'autres résines synthétiques ou naturelles avec

B (f) un ou plusieurs aldéhydes saturés ou non saturés ou des mélanges de ceux-ci ou encore un composé qui, en milieu acide, est suceptible de former un aldéhyde, à laquelle on a ajouté un agent tensio-actif composé de (a), (b) et éventuellement (c) dans la dilution habituelle pour la fabrication des mousses,

sone expansées dans une installation d'expansion classique de façon que, rapporté à une mole de (a) on utilise 0,1 à 5 moles de (b), 0,5 à 12 moles de (f), 0 à 10 moles de (c), 0 à 50 moles de (d) et jusqu'à 80% en poids d'eau.

2. Procédé de fabrication d'une mousse en matière plastique selon la revendication 1, caractérisé en ce qu'en tant que (a) on utilise un acide sulfonique, un acide sulfinique ou un acide sulfamique ou un de leurs sels.

3. Procédé de fabrication d'une mousse en matière plastique, selon la revendication 2, caractérisé en ce qu'on utilise en tant que (a) un acide aryl- ou alkaryl sulfonique, ou un de leurs sels.

4. Procédé de fabrication d'une mousse en matière plastique selon l'une des revendications précédentes, caractérisé en ce qu'on utilise en tant que (b) un phénol mono- ou polyvalent.

5. Procédé de fabrication d'une mousse en matière plastique selon la revendication 4, caractérisé en ce qu'on utilise en tant que (b) de la résorcine.

6. Procédé de fabrication d'une mousse en matière plastique selon l'une des revendications précédentes, caractérisé en ce qu'on utilise en tant que (f) un aldéhyde saturé.

7. Procédé de fabrication d'une mousse en matière plastique selon la revendication 6, caractérisé en ce qu'on utilise en tant que (f) un aldéhyde saturé ayant de 1 à 9 atomes de carbone.

8. Procédé de fabrication d'une mousse en matière plastique selon la revendication 7, caractérisé en ce qu'on utilise du formaldéhyde en tant que (f).

9. Procédé de fabrication d'une mousse en matière plastique selon l'une dès revendications précédentes, caractérisé en qu'on utilise de l'acide phosphorique, de l'acide sulfurique, ou de l'acide acétique ou un mélange de ceux-ci en tant que (c).

10. Procédé de fabrication d'une mousse en matière plastique selon l'une des revendications précédentes, caractérisé en ce qu'en tant que (c) on utilise des charges, des colorants, des pigments colorés, des alcools, des fibres inorganiques ou organiques, des substances tampon, des indicateurs, des catalyseurs, des régulateurs, des plastifiants, des émulsionneurs, des stabilisateurs, des composés au deutérium, des composés organo-métalliques, des métaux et des sels métalliques, des alcoolates, des phénolates, des acétylacétonates, des solvants, des hydrures, des amides, des combinaisons d'hétéro-éléments, des produits de régulation de la polymérisation, de la polyaddition et de la polycondensation, des initiateurs à radicaux et de radicaux, des initiateurs cationiques et anioniques, des enzymes, des vitamines, des hormones, des stéroïdes, des produits biochimiques, des produits actifs et d'addition, des produits anti-flamme, des produits de réticulation, des produits d'expansion, des stabilisateurs UV, des polymères ou des substances antistatiques qui rendet conducteur.

11. Procédé de fabrication d'une mousse en matière plastique selon l'une des revendications précédentes, caractérisé en ce que l'on utilise des résines UF, PUR, PF, des polymérisats de styrène, des copolymères élastomères modifiés, des polyamides, des polyméthacrylates, des polycarbonates, du polytétrafluoréthylène et ses copolymérisats, des substances de base de la fabrication de polyacétalène, des polyesters aromatiques, des polyalkylènetéréphtalates, des résines polyester non saturées, des polymères de silicone, des résines de mélamine et des résines époxy en tant que (e).

12. Mousse en matière plastique fabriquée selon l'une des revendications 1 à 11.